# EUROPÄISCHE PATENTANMELDUNG

(11) **EP 2 287 363 A2**
(43) Veröffentlichungstag der Anmeldung: **23.02.2011**
(21) Anmeldenummer: 10007416.0
(22) Anmeldetag: 17.07.2010
(51) Int. Cl.: C25B 11/04

(54) **Elektrode und Elektrodenbeschichtung**

(30) Priorität: 31.07.2009 DE 102009035546
(71) Anmelder: Bayer MaterialScience AG, 51368 Leverkusen (DE)
(72) Erfinder: Bulan, Andreas, 40764 Langenfeld (DE); Schmitz, Norbert, 51766 Engelskirchen (DE)

(57) **Zusammenfassung**

Es werden eine Elektrode und Elektrodenbeschichtung beschrieben, die auf einem feinteilige Kohlenstoff-Modifikationen und Edelmetall-(oxide) enthaltenden Katalysator basieren.

## Beschreibung

### Elektrode und Elektrodenbeschichtung

Die Erfindung geht aus von mit Katalysatoren beschichteten Elektroden und Elektrodenbeschichtungen für Elektrolyseverfahren zur Herstellung von Chlor

Die Erfindung betrifft neue Katalysatoren Elektrodenbeschichtungen und Elektroden zur Herstellung von Chlor.

Chlor wird technisch üblicherweise durch Elektrolyse von Natriumchlorid oder Salzsäure oder durch Gasphasenoxidation von Chlorwasserstoff hergestellt (Schmittinger, Chorine, Wiley-VCH 1999, Seite 19-27). Werden Elektrolyseverfahren eingesetzt, so wird das Chlor an der Anode erzeugt. Als Anodenwerkstoff wird dabei meist Titan als Elektrodenwerkstoff eingesetzt, auf dessen Oberfläche sich ein elektrochemisch aktiver Katalysator befindet. Die Schicht auf der Oberfläche, die den Katalysator enthält, wird üblicherweise auch als Coating bezeichnet. Aufgabe des Katalysators ist die Herabsetzung der Überspannungen und die Vermeidung der Sauerstoffentwicklung an der Anode (Winnacker-Küchler, Chemische Technik, Prozesse und Produkte, 5. Auflage, Wiley-VCH 2005, Seite 469-470).

Bei der Herstellung von Chlor durch Elektrolyse von Salzsäure werden Graphitanoden eingesetzt (Winnacker-Küchler, Chemische Technik, Prozesse und Produkte, 5. Auflage, Wiley-VCH 2005, Seite 514). Bei der Salzsäure-Elektrolyse, bei der beispielsweise auf der Kathodenseite eine Gasdiffusionselektrode eingesetzt wird, können Titan-Anoden eingesetzt werden, die edelmetallbasierte Katalysatoren im Coating besitzen (Winnacker-Küchler, Chemische Technik, Prozesse und Produkte, 5. Auflage, Wiley-VCH 2005, Seite 515).

Elektroden für Elektrolyse-Prozesse basieren üblicherweise auf einem Metall, das zu den sogenannten Ventil-Metallen gehört. Unter Ventil-Metallen werden z.B. die Metalle Titan, Zirkon, Wolfram, Tantal und Niob verstanden, sie wirken aufgrund von Oxidschichten auf der Metalloberfläche als Diodenmaterial für elektrischen Strom.

Auf der Oberfläche der Ventilmetalle wird üblicherweise ein elektrokatalytisch aktiver Katalysator bestehend aus einem Edelmetall und/oder dessen Metalloxid aufgebracht, wobei auch gegebenenfalls zusätzlich Oxide des Ventilmetalls im Metalloxid enthalten sein können (WO 200602843 (ELTECH), BECK, Electrochimica Acta, Vol. 34, No. 6. Seiten 811-822, 1989)). Das Oxid bildende Edelmetall gehört üblicherweise zu den Platinmetallen, wie z.B. Iridium, Ruthenium, Rhodium, Palladium, Platin oder Mischungen daraus. Üblicherweise werden solche Elektroden als DSA-Elektroden bezeichnet, wobei DSA für "dimension stable anode" steht. Nachteile dieser bekannten Elektroden bei Einsatz in halogenid-haltigen Elektrolyten, sind der noch hohe Überspannungsanteil für die Chlor-Abscheidung, die Neigung der Elektroden trotzdem Sauerstoff zu entwickeln, die hohe Elektrolysespannung und der hohe Bedarf an kostenträchtigem Edelmetall zur Herstellung der Beschichtung. All diese Faktoren haben eine negative Auswirkung auf die Wirtschaftlichkeit der bekannten Elektrolyseverfahrens.

Von den Coatings aus dem Stand der Technik ist bekannt (DE 602005002661 T2), dass unter Elektrolysebedingungen mit der Zeit die Edelmetalle aus dem Coating eluiert werden, es liegt demnach keine ausreichende dauernde Korrosionsbeständigkeit vor. Die Notwendigkeit der Korrosionsbeständigkeit wird dadurch deutlich, dass der Verlust des edelmetallhaltigen Coatings dazu führt, dass das Elektrodenmetall, üblicherweise das Ventilmetall, direkt mit dem Elektrolyten in Kontakt kommt und ein nicht Strom leitendes Oxid auf seiner Oberfläche bildet. Für den laufenden Elektrolyseprozess bedeutet dies, dass an dieser Oberfläche keine elektrochemischen Prozesse mehr stattfinden, was einen Totalausfall mit den entsprechenden wirtschaftlichen Folgen nach sich ziehen kann.

Weiterhin wird bei Einsatz des Elektrolyseurs mit edelmetallhaltigen DSA-Elektroden in chloridhaltigen Lösungen zur Herstellung von Chlor beobachtet, dass die Nebenreaktion der Sauerstoffbildung nicht vollständig unterdrückt werden kann, wodurch Sauerstoff im Chlor enthalten ist. Der Sauerstoffanteil bedingt einen erhöhten Reinigungsaufwand für das Chlor und hat dadurch ebenfalls negative Auswirkungen auf die Wirtschaftlichkeit der Elektrolyse. Die vermehrte Bildung von Sauerstoff wird besonders dann deutlich sichtbar, wenn die Natriumchlorid-Konzentration im Elektrolyten sinkt, besonders bei einer Konzentration unter 200 g/l NaCl.

Weiterhin beeinträchtigt der alleinige Einsatz von Edelmetallen als katalytisches Material durch den hohen Preis und deren schwindende Verfügbarkeit am Weltmarkt ebenfalls die Wirtschaftlichkeit bekannter Elektroden.

Es hat Versuche gegeben, Diamant-Beschichtungen für Elektroden in elektrochemischen Prozessen einzusetzen, z.B. können solche Beschichtungen durch CVD-Verfahren (chemical vapour deposition) auf Elektroden aufgebracht werden. Bei der Elektrolyse in schwefelsaurem Natriumsulfat-Anolyten ist das Coating nicht beständig und platzt ab. Weiterhin wies das Coating Defekte auf, so dass das Elekrodenmetall einem elektrochemischem Korrosionsangriff ausgesetzt war. (AiF Förderprojekt 85 ZN, 2003 bis 2005, Schlußbericht für den Zeitraum 1.01.2003 bis 31.03.2005 "Entwicklung und Qualitätssicherung stabiler Diamant-beschichteter Elektroden für neuartige elektrochemische Prozesse"). Das Forschungsvorhaben wurde wegen Nichtereichung des technischen Ziels eingestellt. (http://www.ist.fraunhofer.de/kompetenz/funktion/diaelektro/Abschlussbericht%20KombiAB2-eingereicht.pdf). Es hat auch eigene unveröffentlichte Versuche zur Verwendung von nur Diamant enthaltenden Elektrodenbeschichtungen in der Elektrolyse gegeben. An diesen Diamant-Strukturen konnte bisher aus einer NatriumchloridLösung kein Chor entwickelt werden. Weiterhin wurde beobachtet, dass die Diamantschicht sich unter Elektrolysebedingungen vom Basismetallträger ablöst.

Es bestand daher die Aufgabe, einen Katalysator zu finden, mit der die Elektrolyse bei niedriger Elektrolysespannung, niedriger Natriumchlorid-Konzentration durchführbar ist und bei der der Sauerstoff-Gehalt im Chlor minimiert ist sowie der Einsatz von Edelmetall reduziert ist. Weitere Aufgabe war eine Beschichtung zu finden, die fest auf dem Basismetall haftet und chemisch sowie elektrochemisch nicht angegriffen wird. Ebenfalls sollte ein chemisch beständiger, edelmetallarmer und preiswerter Katalysator für die Chlorwasserstoff-Gasphasen-Oxidation zur Verfügung gestellt werden.

Überraschenderweise wurde gefunden, dass feinteilige Kohlenstoff-Modifikationen enthaltende Katalysatoren auf Elektroden zur Herstellung von Chlor eingesetzt werden können, wobei die Kohlenstoff-haltige Komponente des Katalysators aus einer oder mehreren Kohlenstoff-Modifikation besteht sowie einem Edelmetall der Platinmetalle und/oder dessen Oxid oder Mischungen davon. Weiterhin kann der Katalysator ein Ventilmetall und/oder dessen Oxid oder deren Mischung enthalten.

Gegenstand der Erfindung ist ein Katalysator zur Herstellung von Chlor mittels Elektrolyse von Chlor-Ionen enthaltenden Elektrolyten, auf Basis wenigstens eines Edelmetalls der Nebengruppe: VIIIa (Fe, Ru, Rh, Pd, Os, Ir, Pt) des periodischen Systems der Elemente und/oder eines Oxids dieser Edelmetalle, **dadurch gekennzeichnet, dass** der Katalysator zusätzlich wenigstens eine feinteilige Kohlenstoff-Modifikation aus der Reihe Diamant, dotierter Diamant, Fulleren, Kohlenstoff-Nanoröhrchen, glasartiger Kohlenstoff (Philosophical Magazine, 11 October 2004, Vol. 84, No. 29, 3159-3167, Fullerene-related structure of commercial glassy carbons, P. J. F. Harris) und Graphit und gegebenenfalls zusätzlich wenigstens ein Ventilmetall oder ein Ventilmetalloxid oder deren Mischungen enthält.

Durch den Einbau von Kohlenstoff-haltigen Komponenten in den Katalysator bzw. in die Oberflächenstruktur der Elektrode kann der Edelmetall-Gehalt der Elektrodenbeschichtung extrem reduziert werden, ohne dass die Elektrolysespannung und der Sauerstoff-Gehalt im Chlor erhöht werden. Weiterer Vorteil der Anwendung des Katalysators bei der Natriumchlorid-Elektrolyse ist, dass die Natriumchlorid-Konzentration im Anolyten von 220g/1-300g/1 auf weniger als 150 g/l NaCl reduziert werden kann ohne dass der Sauerstoff-Gehalt im Chlor ansteigt oder die Elektrolysespannung erhöht wird.

Unter feinteiligen Kohlenstoff-Modifikationen sollen nachfolgend die Formen Diamant, Fullerene, Kohlenstoff-Nanoröhrchen, stickstoffmodifizierte Kohlenstoff-Nanoröhrchen (SEN; "Nitrogencontaining carbon nanotubes"; J. Mater. Chem., 1997, 7(12), 2335-2337) und andere Kohlenstoff-Modifikationen, z.B. glasartiger Kohlenstoff (Sigradur^{®}) und Graphite verstanden werden. Feinteilig im Sinne der Erfindung bedeutet insbesondere, dass der Partikeldurchmesser der Kohlenstoffteilchen 10µm nicht überschreitet.

Diamant ist neben Graphit und den Fullerenen eine der drei Modifikationen des Kohlenstoffs. Seit 1955 ist es mit Hilfe des so genannten Hochdruck-Hochtemperatur-Verfahrens möglich, künstliche Diamanten herzustellen. Bei diesem Verfahren wird Graphit in einer hydraulischen Presse bei einem Druck von bis zu 6 Gigapascal (60.000 Bar) und einer Temperatur von über 1500 °C zusammengepresst. Unter diesen Bedingungen ist Diamant die thermodynamisch stabilere Form von Kohlenstoff, so dass sich der Graphit zu Diamant umwandelt. Dieser Umwandlungsprozess kann unter Beigabe eines Katalysators beschleunigt werden. Analog zum Diamant lässt sich aus der hexagonalen Modifikation des Bor-Nitrids ebenfalls unter Verwendung der Hochdruck-Hochtemperatur-Synthese kubisches Bor-Nitrid (CBN) herstellen. CBN erreicht nicht ganz die Härte von Diamant, ist aber zum Beispiel bei hohen Temperaturen gegen Sauerstoff beständig.

Parallel dazu wurde die Schockwellendiamantsynthese unter Zuhilfenahme höchster Drücke, wie sie bei Explosionen auftreten, entwickelt. Dieser kommerziell erfolgreiche Weg liefert Diamantpulver in verschiedenen Feinheiten.

Eine Alternativmöglichkeit zur Herstellung von künstlichem Diamant ist die Beschichtung von Substraten mit Hilfe der chemischen Gasphasenabscheidung (CVD-Verfahren). Dabei wird in einer Vakuumkammer eine einige Mikrometer dicke Diamantschicht auf den Substraten, zum Beispiel Hartmetall-Oberflächen, abgeschieden. Ausgangsstoff dabei ist ein Gasgemisch aus Methan und Wasserstoff, wobei ersteres als Kohlenstoffquelle dient. Gemäß der Ostwaldschen Stufenregel sollte sich hauptsächlich metastabiler Diamant abscheiden; nach der Ostwald-Volmer-Regel bildet sich wegen seiner geringeren Dichte vorwiegend Graphit. Mit atomarem Wasserstoff gelingt es, Graphit selektiv zu zersetzen und die Bildung von Diamant zu begünstigen. Atomarer Wasserstoff entsteht in einem thermisch oder elektrisch aufgeheizten Plasma aus molekularem Wasserstoff-Gas. Die Substrattemperatur muss unterhalb von 1000°C liegen, um die Umwandlung in das stabile Graphit zu unterbinden. Es lassen sich dann Wachstumsraten von mehreren Mikrometern pro Stunde erreichen. Als weitere Entwicklung können mit Hilfe der Technik der Plasmabeschichtung nur wenige Mikrometer dünne Schichten aus so genanntem diamantartigen Kohlenstoff (DLC: diamond-like carbon) hergestellt werden. Diese Schichten vereinigen gleichzeitig die extreme Härte von Diamant und die sehr guten Gleitreibungseigenschaften von Graphit.

Diamantstrukturen können, z.B. nach dem von der Fa. DIACCON entwickelten Verfahren, durch Microwave-Plasma CVD auf Oberflächen aufgebracht werden. Dabei werden in einem 2000°C - 6000°C heißen Plasma Radikale in einem Gasgemisch aus Wasserstoff, Methan und Sauerstoff gebildet, die auf einem 600°C - 950°C heißen Substrat zu kristallinem Diamantwachstum führen. Die Wachstumsraten liegen bei dieser Abscheidetechnik zwischen 0,5 - 10 Mikrometer pro Stunde. Ein weiter von DIACCON angewandtes Verfahren ist das Hot-Filament CVD Verfahren. Hierbei werden die Radikale aus einem 1800°C - 2500°C heißem Draht aus Wolfram, Tantal oder Rhenium in einem Gasgemisch aus Wasserstoff und Methan produziert, die sich auf dem etwa 600°C - 950°C heißen Substrat als kristalliner Diamant abscheiden. Durch gezielte Beeinflussung der Wachstumsparameter können verschiedene Diamantmorphologien und Wachstumsraten erreicht werden. Durchschnittliche Wachstumsraten bewegen sich im Bereich von 0,1 bis 1 Mikrometer pro Stunde.

Ventil-Metalle im Sinne der Erfindung sind insbesondere die Metalle aus der Gruppe: Titan, Zirkon, Wolfram, Tantal und Niob.

Gegenstand der Erfindung ist auch eine Elektrode zur Herstellung von Chlor mittels Elektrolyse Chlor-Ionen enthaltender Elektrolyte mindestens bestehend aus einem elektrisch leitenden Träger und einer katalytisch wirkenden Beschichtung, **dadurch gekennzeichnet, dass** die katalytisch wirkende Beschichtung einen erfindungsgemäßen Katalysator wie zuvor beschrieben enthält.

Bevorzugt ist eine Elektrode, **dadurch gekennzeichnet, dass** der elektrisch leitende Träger aus einem Ventilmetall aus der Reihe: Titan, Zirkon, Wolfram, Tantal und Niob gebildet ist, bevorzugt aus Titan.

Für das erfindungsgemäße Verfahren wird als Werkstoff für den Träger und gegebenenfalls als Zusatz zur Beschichtung besonders bevorzugt Titan eingesetzt.

Eingesetzt nach dem erfindungsgemäßen Verfahren können auch dotierte Diamanten, beispielsweise Bor-dotierte Diamanten, sowie Fullerene, die mit Diamanten, dotierten Diamanten oder Edelmetallen, z.B. der Platinmetalle, gefüllt sind.

Elektroden mit Elektrodenbeschichtungen, die den Katalysator mit feinteiligen Kohlenstoff-Modifikationen enthalten, können neben den beschriebenen Anwendungen bei der Chlorherstellung alternativ auch bei der Elektrolyse von Wasser, der Regenerierung von Chrombädern, bei Einsatz von fluorid-haltigen Elektrolyten bei der Wasserstoffperoxid-, Ozonder Peroxodisulfat-Herstellung eingesetzt werden.

Die zusätzliche Dotierung der erfindungsgemäßen Katalysatoren mit weiteren Metallen bzw. deren Oxiden wie z.B. Nickel, Cobalt, Zinn oder Lanthan stellt ebenfalls eine weitere Variante dar. Dabei beträgt das Verhältnis von Dotierungsmetall zu Edelmetall in der katalytisch aktiven Schicht 0,0001 bis 0,1 (mol/mol).

Bevorzugt ist ein Katalysator, **dadurch gekennzeichnet, dass** der Katalysator 10 bis 90 mol%, bevorzugt 20 bis 80 mol.%, feinteilige Kohlenstoff-Modifikation und 0,05 bis 40 mol%-%, bevorzugt 1 bis 20 mol.-%, Edelmetall und/oder Edelmetalloxid ausweist.

Besonders bevorzugt ist ein Katalysator, **dadurch gekennzeichnet, dass** der Katalysator 0,05 - 40 mol.% Edelmetall und/oder Edelmetalloxid, 9,95 - 60 mol% Ventil-Metall und/oder Ventilmetalloxid und 20 bis 90 mol-% der Kohlenstoff-Modifikation aufweist.

Die Edelmetallbeladung beträgt dabei von 0,1 bis 20 g Edelmetall / m² bzw. 0,1 bis 50g Kohlenstoff / m². Die Fläche bezieht sich auf die projizierte Elektrodenoberfläche. Elektroden für die Chlorherstellung bestehen meist aus Streckmetallen oder Louver-Strukturen. Die Menge an Edelmetall bzw. Kohlenstoff bezieht sich dann auf eine Oberfläche, die durch die äußeren Abmessungen errechnet werden kann. Die Menge an Edelmetall bzw. Kohlenstoff die je m² aufgebracht wird, kann durch die Konzentration der Auftragslösung oder durch die Anzahl der Wiederholungszyklen eingestellt werden. Die einzelnen Zyklen können jeweils durch Trocknungs- und/oder Sinterzyklen unterbrochen sein. Die Trocknung bzw. Sinterung kann dabei bei vermindertem Druck und/oder in anderen Gasatmosphären erfolgen.

Die Katalysatoren zur Herstellung der Beschichtung auf dem Träger, z.B. einem Ventilmetall-Basis-Substrat können mit unterschiedlichen Methoden aufgebracht werden.

Gegenstand der Erfindung ist auch ein Verfahren zur Herstellung von Elektroden zur Herstellung von Chlor, **dadurch gekennzeichnet, dass** auf einem Grundwerkstoff bestehend aus einem Ventil-Metall der Gruppe Titan, Zirkon, Wolfram, Tantal oder Niob eine Schicht aus wenigstens einer Kohlenstoff enthaltenden Verbindung aus der Reihe Diamant, dotierter Diamant, beispielsweise mit Bor dotierter Diamant, Fullerene und Kohlenstoff-Nanoröhrchen und gegebenenfalls zusätzlich wenigstens einem Ventilmetall oder einem Ventilmetalloxid oder deren Mischungen und einem Edelmetall des periodischen Systems der Elemente und/oder eines Oxid dieser Edelmetalle aufgebracht wird, indem eine Mischung aus einem Pulver der Kohlenstoff-Modifikation enthaltenden Verbindung, einem Lösungsmittel, gegebenenfalls einer im Lösungsmittel löslichen Ventilmetallverbindung und einer vorzugsweise löslichen Edelmetallverbindung auf den Grundwerkstoff aufgebracht und zur Entfernung von Lösemittel getrocknet und/oder gesintert wird.

Eine besondere Ausführungsform des neuen Verfahrens besteht darin, auf einer Elektroden-Struktur, die aus einem Ventilmetall besteht, die Katalysatoren wie folgt aufzubringen: Hierfür wird die Elektroden-Struktur gesandstrahlt und anschließend zur Entfernung von Oxiden auf der Oberfläche mit einer Säure wie Salzsäure oder Oxalsäure geätzt.

Zur Beschichtung der Oberfläche kann beispielsweise eine Suspension eingesetzt werden, die aus einer Edelmetallverbindung, wenigstens einem Lösungsmittel aus der Reihe: C₁-C₆-Alkohol, Wasser, einer Mineralsäure, einer Ventil-Metall-Verbindung und der Kohlenstoff-Modifikation besteht.

Dieser Suspension können bedarfsweise weitere andere Metalle oder Metallverbindungen zugesetzt werden.

Die Suspension weist bevorzugt bis 20 Gew.-%, besonders bevorzugt bis 10 Gew.-%, Feststoff, bezogen auf das Gewicht der Suspension, auf. Es können jedoch auch Suspensionen mit geringerem Feststoffgehalt erzeugt werden, wenn der Beschichtungsprozess mit einer erhöhten Anzahl Zyklen durchgeführt werden soll. Eine erhöhte Anzahl Zyklen sind besonders dann vorteilhaft, wenn eine gleichmäßigere Edelmetallverteilung bei sehr geringem Edelmetallgehalt erreicht werden soll.

Als Edelmetall-Verbindung kann beispielsweise ein Edelmetall-Chlorid eingesetzt werden.

Als Alkohol können kurzkettige Vorläuferverbindungen, d. h. C₁-C₆-Alkohole wie n-Butanol verwendet werden. Als Säure kann z.B. konz. Salzsäure eingesetzt werden. Als VentilmetallVerbindung dient z.B. im Falle von Titan als Elektroden-Träger der Titansäuretetrabutylester. Dieser Lösung bzw. Suspension kann die feinteilige Kohlenstoff-Modifikation zugesetzt werden.

Durch Variation der Zusammensetzung der Suspension kann die Viskosität auf den jeweiligen Auftragungs-Prozess abgestimmt werden.

Die hergestellte Suspension wird dann bevorzugt in mehreren Zyklen auf die Oberfläche des Elektroden-Substrates aufgebracht. Dies kann durch Pinseln, Sprühen oder Tauchen erfolgen. Ebenso sind andere Aufbringverfahren denkbar. Nach einem Aufbringzyklus können die flüssigen Komponenten der Suspension durch Trocknung entfernt werden. Jetzt besteht die Möglichkeit einen neuen Zyklus zu beginnen oder die Elektrode nach der Trocknung einer Sinterung bei einer Temperatur oberhalb von 60°C auszusetzen. Hiernach kann erneut die Suspension aufgebracht werden. Trocknungs- und Sintervorgänge können abwechseln oder auch in beliebigen Reihenfolgen aufeinander durchgeführt werden.

Die Trocknung der Beschichtung kann dabei bei Normaldruck als auch bei vermindertem Druck, ggf. unter einem Schutzgas, erfolgen. Dies gilt ebenso für die Sinterung der Beschichtung.

Es ist ebenfalls denkbar, die Rezeptur der Suspension mit den Auftrags- und Trocknungszyklen zu verändern und dadurch Gradienten im Aufbau des Coatings zu erzeugen. So kann z.B. zuerst mit geringem Edelmetall-Gehalt das Elektrodenmetall beschichtet werden und in weiteren Beschichtungszyklen der Edelmetallgehalt erhöht werden.

Ebenso ist denkbar, verschiedene Kohlenstoff-Modifikationen in der Suspension zu mischen.

Erfindungsgegenstand ist auch eine Elektrode zur Herstellung von Chlor mittels Elektrolyse Chlor-Ionen enthaltender Elektrolyte mindestens bestehend aus einem elektrisch leitenden Träger und einer katalytisch wirkenden Beschichtung, **dadurch gekennzeichnet, dass** die katalytisch wirkende Beschichtung einen erfindungsgemäßen Katalysator wie zuvor beschrieben enthält.

Bevorzugt ist eine Elektrode, **dadurch gekennzeichnet, dass** der elektrisch leitende Träger aus einem Ventilmetall aus der Reihe: Titan, Zirkon, Wolfram, Tantal und Niob gebildet ist, bevorzugt aus Titan.

Gegenstand der Erfindung ist ferner eine Elektrode erhalten nach dem neuen Beschichtungsverfahren. Weiter ist Gegenstand der Erfindung die Verwendung der neuen Elektrode zur anodischen Elektrolyse Chlor-Ionen enthaltender Elektrolyte, insbesondere von wässrigen HCl- oder NaCl-Lösungen zur Herstellung von Chlor.

Die so hergestellten beschichteten Elektroden können als Anode insbesondere bei der Natriumchlorid- und bei der Salzsäure-Elektrolyse eingesetzt werden.

Die Erfindung wird nachfolgend beispielhaft näher erläutert.

### Beispiele

### Beispiel 1 (Vergleichsbeispiel mit handelsüblichen Anoden für die NalI-Elektrolyse)

Es wurde eine Standard-Anode der Fa. Denora für die NaCl-Elektrolyse, die mit einem Ruthenium-haltigen Coating ausgerüstet war, eingesetzt. Dabei betrug die Größe der Anode in der eingesetzten Laborzelle 10*10 cm, das Anodenträgermaterial bestand aus Titan und hatte die Form eines Streckmetalls, charakterisiert durch die Maschenweite 8 mm, Stegbreite 2 mm und Stegdicke 2 mm. Zwischen Anoden- und Kathodenraum wurde eine Ionenaustauschermembran der Fa. Dupont, Typ Nafion 982, eingesetzt. Als Kathode diente eine Standard-Kathode der Fa. Denora für die NaCl-Elektrolyse. In den Anodenraum der Elektrolysezelle wurde eine NaCl-haltige Lösung mit einer Natriumchlorid-Konz. von 210 g/l und 88 °C eingeleitet. Auf der Kathodenseite der Zelle wurde eine Natronlauge mit einer NaOH-Konz. von 31,5 Gew.-% und 88 °C eingeleitet. Die Stromdichte betrug 4 kA/m², berechnet auf die Membranfläche von 10*10 cm. Die Chlor-Konzentration des aus der Anoden-Kammer entweichenden Gases betrug 97 Vol.-%. Die Elektrolysespannung betrug 3,05 V.

### Beispiel 2 (Vergleichsbeispiel)

Eine Coating Lösung, bestehend aus 2,02 g RuCl₃*3H₂O, 1,5 g IrCl₃*3H₂O, 17,4 ml n-Butanol, 1,1ml konz. Salzsäure, 6 ml Titansäuretetrabutylester wird angemischt. Diese wird auf ein gesandstrahltes und anschließend in 10%iger Oxalsäure bei 90°C 30 Minuten lang geätztes Titan-Streckmetall als Träger mittels Pinsel aufgetragen. Anschließend wird das Streckmetall für 10 min bei 80 °C getrocknet und anschließend bei 10 min bei 470 °C gesintert. Der Auftragsprozess wird viermal wiederholt, ebenso die Trocknung und Sinterung. Die letzte Sinterung erfolgt bei 470 °C für 60 min. Die Edelmetallbeladung betrug 10,5g Ru/m² und 10,6g Ir/m². Die erzeugte Oberfläche hat eine Zusammensetzung von 27,1 mol% Ru, 14,4 mol%Ir und 58,6 mol%Ti. Diese so behandelte Anode wurde in einer Zelle wie im Beispiel 1 bei der Natriumchlorid-Elektrolyse mit einer handelsüblichen Standard-Kathode eingesetzt. Die Chlor-Konzentration des aus der Anoden-Kammer entweichenden Gases betrug 98,3 Vol.-%. Die Elektrolysespannung betrug 3,06 V.

### Beispiel 3 (erfindungsgemäßes Verfahren - Diamant)

Eine Coating Lösung, bestehend aus 0,32 g Rutheniumchlorid-Hydrat mit einem Ruthenium-Gehalt von 40,5 Gew.-%, 12,4 ml n-Butanol, 0,8 ml konz. Salzsäure, 6 ml

Titansäuretetrabutylester und 0,62 g Diamant-Staub mit einer Korngröße von höchstens 1µm wird angemischt. Diese wird auf ein gesandstrahltes und anschließend in 10 %iger Oxalsäure bei 90 °C 30 Minuten lang geätztes Titan-Streckmetall mittels Pinsel aufgetragen. Anschließend wird das Streckmetall für 10 min bei 80 °C getrocknet und anschließend bei 10 min bei 470 °C gesintert. Der Auftragsprozess wird viermal wiederholt, ebenso die Trocknung und Sinterung. Die letzte Sinterung erfolgt bei 470 °C für 60 min. Diese so behandelte Anode wurde wie im Beispiel 1 bei der Natriumchlorid-Elektroyse eingesetzt. Die Beladung der Elektrode betrug 3,47 g Ru/m² und 16,5 g Diamant/m². Die Zusammensetzung der Oberfläche betrug: 1,8 mol% Ru, 24,8 mol% Ti und 73,3 mol% Kohlenstoff in Form von Diamant. Diese so behandelte Anode wurde wie im Beispiel 1 bei der Natriumchlorid-Elektroyse mit einer handelsüblichen Standard-Kathode eingesetzt. Die Chlor-Konzentration des aus der Anoden-Kammer entweichenden Gases betrug 98,5 Vol.-%. Die Elektrolysespannung betrug 2,96 V.

### Beispiel 4 (erfindungsgemäßes Verfahren-Fulleren)

Eine Coating Lösung, bestehend aus 0,32 g Rutheniumchlorid-Hydrat mit einem Ruthenium-Gehalt von 40,5 Gew.-%, 12,4 ml n-Butanol, 0,8 ml konz. Salzsäure, 6 ml Titansäuretetrabutylester und 0,63 g Fulleren (Typ Fullaron^{®} M3D der Fa. Nanocompound) wird angemischt. Diese wird auf ein gesandstrahltes und anschließend in 10 %iger Oxalsäure bei 90 °C 30 Minuten lang geätztes Titan-Streckmetall mittels Pinsel aufgetragen. Anschließend wird das Streckmetall für 10 min bei 80 °C getrocknet und anschließend bei 10 min bei 470 °C gesintert. Der Auftragsprozess wird viermal wiederholt, ebenso die Trocknung und Sinterung. Die letzte Sinterung erfolgt bei 470 °C für 60 min. Diese so behandelte Anode wurde wie im Beispiel 1 bei der Natriumchlorid-Elektroyse eingesetzt. Die Edelmetallbeladung betrug 3,47 g Ru/m² und 16,5 g Fulleren/m². Die Zusammensetzung der Oberfläche betrug: 1,8 mol% Ru, 24,8 mol% Ti und 73,3 mol% Kohlenstoff in Form von Fulleren. Diese so behandelte Anode wurde wie im Beispiel 1 bei der Natriumchlorid-Elektroyse mit einer handelsüblichen Standard-Kathode eingesetzt. Die Chlor-Konzentration des aus der Anoden-Kammer entweichenden Gases betrug 98,4 Vol.-%. Die Elektrolysespannung betrug 3,08 V.

### Beispiel 5 (erfindungsgemäßes Verfahren - Diamant-haltiges Coating, geringe Salzkonzentration im Anolyten)

Ein Coating gemäß Beispiel 3 wurden eingesetzt. Die Betriebsbedingungen waren bis auf die NaCl-Konzentration im Anolyten die gleichen wie im Beispiel 1. Die NaCl-Konzentration betrug nur noch 100 g/l. Die Zellspannung betrug 3,06V und die Stromausbeute 94,5%. Trotz der geringen NaCl-Konzentration konnte die Zelle betrieben werden. Die Zellspannung liegt bei Verwendung handelsüblicher Elektroden in vergleichbarer NaCl-Konzentration höher.

## Patentansprüche

1. Katalysator zur Herstellung von Chlor mittels Elektrolyse Chlor-Ionen enthaltender Elektrolyte, auf Basis wenigstens eines Edelmetalls der Nebengruppe: VIIIa (Fe, Ru, Rh, Pd, Os, Ir, Pt) des periodischen Systems der Elemente und/oder eines Oxid dieser Edelmetalle, **dadurch gekennzeichnet, dass** der Katalysator zusätzlich wenigstens eine feinteilige Kohlenstoff-Modifikation aus der Reihe Diamant, dotierter Diamant, Fullerene, Kohlenstoff-Nanoröhrchen, glasartiger Kohlenstoff und Graphit und gegebenenfalls zusätzlich wenigstens ein Ventilmetall und/oder ein Ventilmetalloxid enthält.

2. Katalysator gemäß Anspruch 1, **dadurch gekennzeichnet, dass** der Katalysator 10 bis 90 mol.-%, bevorzugt 20 bis 80 mol.-%, feinteilige Kohlenstoff-Modifikation und 0,05 bis 40 mol%, bevorzugt 1 bis 20 mol%, Edelmetall und Edelmetalloxid ausweist.

3. Katalysator gemäß Anspruch 1 oder 2, **dadurch gekennzeichnet, dass** der Katalysator 0,05 bis 40 mol% Edelmetall und/oder Edelmetalloxid, 9,95-60 mol% Ventil-Metall und/oder Ventilmetalloxid und 20-90 mol% der Kohlenstoff-Modifikation aufweist.

4. Katalysator gemäß einem der Ansprüche 1 bis 3, **dadurch gekennzeichnet, dass** die Kohlenstoff-Modifikation Diamant und/oder Bor - dotierter Diamant ist.

5. Katalysator gemäß einem der Ansprüche 1 bis 4, **dadurch gekennzeichnet, dass** das Edelmetall oder Edelmetalloxid eines der Reihe: Iridium, Ruthenium, Rhodium, Palladium und Platin bzw. deren Oxid ist.

6. Katalysator gemäß einem der Ansprüche 1 bis 5, **dadurch gekennzeichnet, dass** das Ventilmetall oder Ventilmetalloxid eines der Reihe: Titan, Zirkon, Wolfram, Tantal und Niob bzw. deren Oxid ist, bevorzugt Tantal und/oder Tantaloxid.

7. Elektrode zur Herstellung von Chlor mittels Elektrolyse Chlor-Ionen enthaltender Elektrolyte mindestens bestehend aus einem elektrisch leitenden Träger und einer katalytisch wirkenden Beschichtung, **dadurch gekennzeichnet, dass** die katalytisch wirkende Beschichtung einen Katalysator gemäß einem der Ansprüche 1 bis 6 enthält.

8. Elektrode gemäß Anspruch 7, **dadurch gekennzeichnet, dass** der elektrisch leitende Träger aus einem Ventilmetall aus der Reihe: Titan, Zirkon, Wolfram, Tantal und Niob gebildet ist, bevorzugt aus Titan.

9. Elektrode gemäß einem der Ansprüche 7 bis 8, **dadurch gekennzeichnet, dass** die Edelmetallbeladung der Elektrodenfläche von 0,1 bis 20 g Edelmetall / m² beträgt und/oder dass die Beladung der Elektrodenfläche mit feinteiligem Kohlenstoff von 0,1 bis 50 g Kohlenstoff / m² beträgt.

10. Verfahren zur Herstellung von Elektroden zur Herstellung von Chlor, **dadurch gekennzeichnet, dass** auf einem Grundwerkstoff bestehend aus einem Ventil-Metall der Gruppe Titan, Zirkon, Wolfram, Tantal oder Niob eine Schicht aus wenigstens einer Kohlenstoff enthaltenden Verbindung aus der Reihe Diamant, dotierter Diamant, Fullerene und Kohlenstoff-Nanoröhrchen und gegebenenfalls zusätzlich wenigstens einem Ventilmetall oder einem Ventilmetalloxid oder deren Mischungen und einem Edelmetall des periodischen Systems der Elemente und/oder eines Oxid dieser Edelmetalle aufgebracht wird, indem eine Mischung aus einem Pulver der Kohlenstoff-Modifikation, einem Lösungsmittel und einer löslichen Edelmetallverbindung, gegebenenfalls zusätzlich einer im Lösungsmittel löslichen Ventilmetallverbindung auf den Grundwerkstoff aufgebracht und zur Entfernung von Lösemittel getrocknet und/oder gesintert wird.

11. Verfahren gemäß Anspruch 10, **dadurch gekennzeichnet, dass** das Aufbringen, Trocknen und/oder Sintern der Katalysatormischung bis zu 20 mal, insbesondere bis zu 10 mal wiederholt wird.

12. Verfahren nach Anspruch 10 oder 11, **dadurch gekennzeichnet, dass** die Suspension einen Feststoffgehalt von bis zu 20 Gew.-%, bevorzugt bis zu 10 Gew.-%, aufweist.

13. Elektrode erhalten nach einem Verfahren gemäß einem der Ansprüche 10 bis 12.

14. Verwendung der Elektrode nach einem der Ansprüche 7 bis 9 und 13 zur anodischen Elektrolyse Chlor-Ionen enthaltender Elektrolyte, insbesondere von wässrigen HCl- oder NaCl- Lösungen zur Herstellung von Chlor.

15. Verwendung der Elektrode nach den Ansprüchen 7 bis 9 und 13 zur Elektrolyse von Wasser, zur Regenerierung von Chrombädern, beim Einsatz von fluorid-haltigen Elektrolyten bei der Wasserstoffperoxid-, Ozon- oder bei der Peroxodisulfat-Herstellung.
